# EUROPEAN PATENT SPECIFICATION

(11) **EP 2 343 767 B1**
(45) Date of publication and mention of the grant of the patent: **29.03.2017**
(21) Application number: 10196891.5
(22) Date of filing: 23.12.2010
(51) Int. Cl.: H01M 10/04, H01M 10/42, G06K 19/077, H01M 10/052

(54) **Secondary battery**
Sekundärbatterie
Batterie secondaire

(30) Priority: 05.01.2010 US 292445 P
(43) Date of publication of application: 13.07.2011
(73) Proprietor: Samsung SDI Co., Ltd, Gyeonggi-do 17084 (KR)
(72) Inventor: Ahn, Chang-bum, Gyeonggi-do (KR)
(74) Representative: Walaski, Jan Filip

(56) References cited:
- EP-A2- 1 970 722
- JP-A- 5 114 392
- JP-A- 2005 010 859
- US-A1- 2001 033 952
- US-A1- 2006 035 141

## Description

The present invention relates to a secondary battery, and more particularly, to a secondary battery having a minimized thickness.

As representative rechargeable secondary batteries, lithium (Li) secondary batteries have a high operational voltage and energy density per unit weight as compared with nickel-cadmium (Ni-Cd) or nickel-hydrogen (Ni-MH) secondary batteries. Hence, their uses have been increased. As the use of portable electronic devices increases, the use of secondary batteries increases. Studies for reducing the size and thickness of secondary batteries have been conducted based on users' demands.

Currently, a memory unit for storing information and a processing unit for processing information are additionally embedded into a smart card. To this end, a technology for embedding a battery into a smart card has been developed.

In Japanese Patent Laid-Open Publication No. 2005-10859 (published on January 13, 2005), there has been disclosed a thin-film integrated circuit (IC) card into which a secondary battery such as a capacitor or lithium secondary battery, sealed by a case, is embedded not to overlap with an IC module.

US2001/033952 discloses an integrated battery device and JP5 114392 discloses a mounting structure of a battery on a circuit board. US2006/035141 and EP1970722 disclose pouch type lithium batteries.

According to the invention, there is provided a secondary battery as defined in claim 1 and a smart card including the secondary battery.

The thickness of secondary batteries is necessarily decreased so that smart cards are manufactured to have a size suitable for international standards. In one embodiment, there is provided a secondary battery having a minimized thickness.

According to the present invention, there is provided a secondary battery, comprising a circuit board comprising first and second connection terminals, first and second electrode layers on the circuit board and connected to the first and second connection terminals respectively, and a separator interposed between the first and second electrode layers.

The first connection terminal may comprise a first connection pad disposed towards a first edge of the circuit board and the second connection terminal may comprise a second connection pad disposed towards a second edge of the circuit board.

The first electrode layer may comprise a first electrode portion and a first tab portion extending from the first electrode portion and connected to the first connection pad and the second electrode layer may comprise a second electrode portion and a second tab portion extending from the second electrode portion and connected to the second connection pad.

The first tab portion may extend from a corner of the first electrode portion and the second tab portion may extend from a corner of the second electrode portion on an opposite side to that of the first electrode portion.

The secondary battery may further comprise a protection circuit on the circuit board, wherein the protection circuit is connected to the connection terminals via a circuit interconnection.

The circuit board may comprise a flexible printed circuit board.

The circuit board may be coated with a protection layer, wherein the connection terminals are exposed through openings in the protection layer.

The secondary battery may further comprise a first insulating cover film on a surface of the second electrode layer. There may be a second insulating cover film on a surface of the circuit board. The first or second insulating cover films may seal the peripheral edges of the circuit board.

The separator may extend beyond the edges of the first electrode layer to prevent a short circuit between the first and second electrode layers.

A smart card may be provided comprising a secondary battery as described above, wherein the circuit board may include an integrated circuit module connected to the first and second terminals.

The smart card may further comprise a case for receiving the circuit board, the case including first and second exterior terminals respectively connected to the first and second electrode layers.

The case may comprise a flexible resin. The case may comprise upper and lower plates, wherein the upper and lower plates are joined together so that the exterior terminals are in contact with the first and second terminals.

The accompanying drawings, together with the specification, illustrate exemplary embodiments of the present invention, and, together with the description, serve to explain the principles of the present invention.
FIG. 1A is an exploded perspective view of a secondary battery according to an embodiment of the present invention.
FIG. 1B is an exploded perspective view of a secondary battery according to another embodiment of the present invention.
FIG. 2 is an exploded perspective view of a smart card according to an embodiment of the present invention.
FIG. 3 is a sectional view illustrating a circuit board of FIG. 2.
FIG. 4 is a block diagram of an integrated circuit module of FIG. 3.
FIGS. 5A to 5C are plan views illustrating the secondary battery according to an embodiment of the present invention.
FIGS. 6A to 6C are sectional views taken along lines I1-I11 of FIGS. 5A to 5C, respectively.
FIG. 6D is a sectional view taken along line I2-I22 of FIG. 5C.
FIG. 7 is a sectional view of a case of FIG. 1.
FIG. 8 is a sectional view of the secondary battery according to an embodiment of the present invention.
FIG. 9 is a perspective view of the secondary battery according to an embodiment of the present invention.

In the following detailed description, only certain exemplary embodiments of the present invention have been shown and described, simply by way of illustration. As those skilled in the art would realize, the described embodiments may be modified in various different ways, all without departing from the scope of the present invention as defined by the claims. Accordingly, the drawings and description are to be regarded as illustrative in nature and not restrictive. In addition, when an element is referred to as being "on" another element, it can be directly on the another element or be indirectly on the another element with one or more intervening elements interposed therebetween. Also, when an element is referred to as being "connected to" another element, it can be directly connected to the another element or be indirectly connected to the another element with one or more intervening elements interposed therebetween. Hereinafter, like reference numerals refer to like elements.

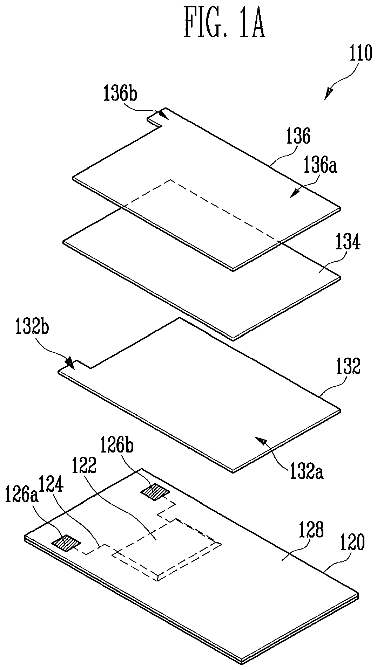

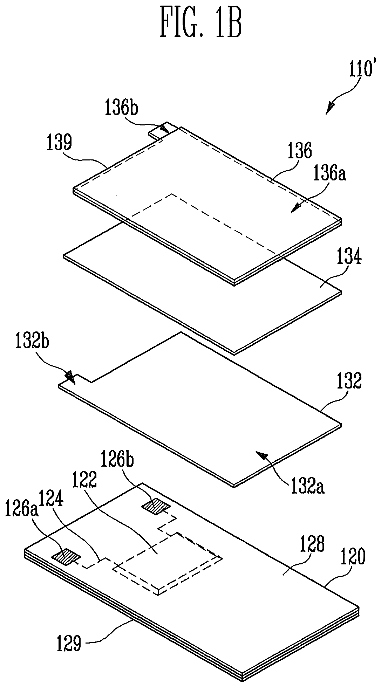

FIGS. 1A and 1B are exploded perspective views of a secondary battery according to embodiments of the present invention.

Referring to FIG. 1A, the secondary battery 110 includes a circuit board 120 having a protection circuit 122; a positive electrode layer 132 formed on the circuit board 120 and connected to a first connection terminal, for example a pad portion 126a on the circuit board 120; a negative electrode layer 136 disposed opposite to the positive electrode layer 132 and connected to a second connection terminal, for example a pad portion 126b; and a separator 134 interposed between the positive and negative electrode layers 132 and 136.

The circuit board 120 is formed in the form of a thin film like a flexible printed circuit board. On the circuit board 120 are formed a circuit interconnection 124 and the pad portions 126a and 126b connected to the circuit interconnection 124. The protection circuit 122 is connected to the circuit interconnection 124. The surface of the circuit board 120 is coated with a protection layer 128. The pad portions 126a and 126b are exposed to the exterior of the circuit board 120 through openings formed in the protection layer 128, respectively.

The positive electrode layer 132 is formed to have, for example, a thickness of about 10 to 30 µm on the circuit board 120. The positive electrode layer 132

includes an electrode portion 132a and a tab portion 132b protruding from the electrode portion 132a. The tab portion 132b is connected to the exposed pad portion 126a, so that the positive electrode layer 132 is connected to the circuit board 120.

The positive electrode layer 132 may be formed of a positive electrode active material using a spray, coating or deposition method. Lithium-based oxides such as lithium cobalt oxide (LiCoO₂), lithium nickel oxide (LiNiO₂) and lithium manganese oxide (LiMn₂O₄) may be used as the positive electrode active material. A binder and conducting material may be mixed with the positive electrode active material.

In this embodiment, the positive electrode layer 132 does not include a positive electrode collector made of a metal such as aluminum (Al). Hence, in order to secure sufficient conductivity, the conducting material may be mixed in the positive electrode active material at a rate of about 10% or higher, e.g., about 10 to 40%.

The separator 134 may be formed to have, for example, a thickness of about 3 to 10 µm on the positive electrode layer 132. In order to prevent a short circuit between the positive and negative electrode layers 132 and 136, the width of the separator 134 may be formed wider than that of the positive electrode layer 132, i.e., to surround sidewalls of the electrode portion 132a of the positive electrode layer 132.

The separator 134 is a porous insulating material through which lithium ions can pass. The separator 134 may be formed with a fiber non-woven fabric including resin such as polyethylene, polypropylene or polyolefin, mixture thereof, or one or more selected from the group consisting of cellulose, polyester and polypropylene.

An ethylene carbonate (EC)-based or propylene carbonate (PC)-based electrolyte may be contained in the separator 134. For example, an electrolyte may be penetrated into the separator 134 by dipping the separator 134 in the electrolyte.

The negative electrode layer 136 may be formed to have, for example, a thickness of about 10 to 30 µm on the separator 134. The negative electrode layer 136 includes an electrode portion 136a and a tab portion 136b protruding from the electrode portion 136a. The tab portion 136b is connected to the exposed pad portion 126b, so that the negative electrode layer 136 is connected to the circuit board 120. The electrode portion 136a of the negative electrode layer 136 is disposed to overlap with the electrode portion 132a of the positive electrode layer 132. The tab portion 136b of the negative electrode layer 136 is necessarily disposed at a different position from that of the tab portion 132b of the positive electrode layer 132 so as not to overlap with the tab portion 132b of the positive electrode layer 132. The tab portions 132b, 136b may be formed at opposite sides of the circuit board.

The negative electrode layer 136 may be formed of a negative electrode active material using a spray, coating or deposition method. Coke-based or graphite-based carbon may be used as the negative electrode active material. A binder and a conducting material may be mixed with the negative electrode active material.

In the secondary battery of this embodiment, a stacked assembly of the positive electrode layer 132, the separator 134 and the negative electrode layer 136 is directly formed on the circuit board 120, so that the circuit board 120 can be used as a case, and the thickness of the secondary battery 110 can be minimized.

FIG. 1B shows the same battery structure as in FIG. 1A, but further shows a first insulating cover film (139) on a surface of the negative electrode layer (136), and a second insulating cover film (129) on an underside of the circuit board. The first or second insulating cover films (129, 139) may extend to seal the peripheral edges of the circuit board, or the whole battery may be sealed by an insulating cover film.

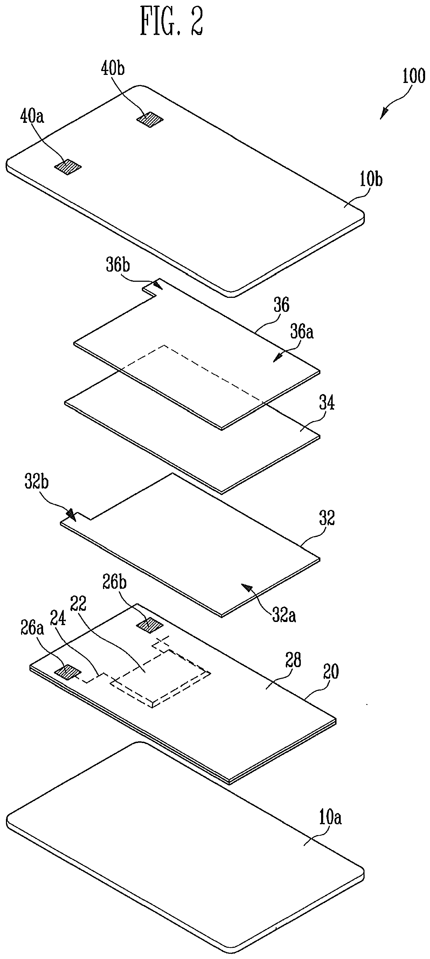

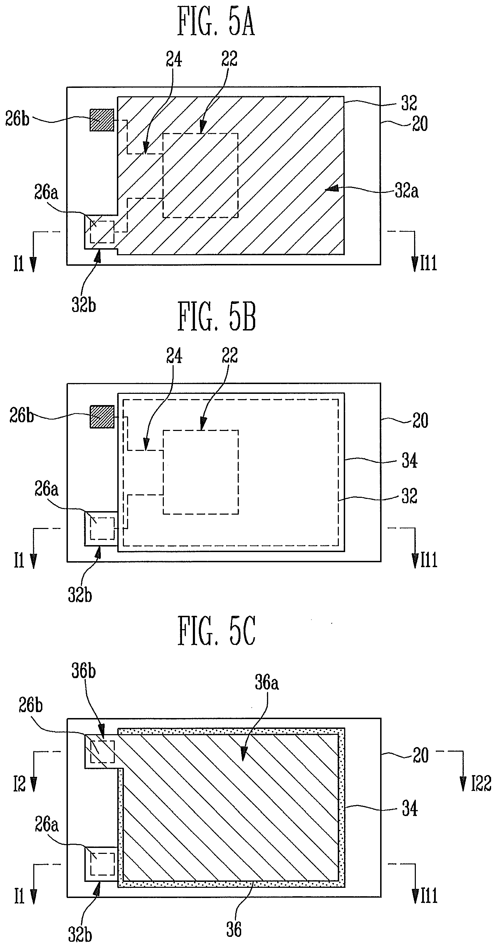

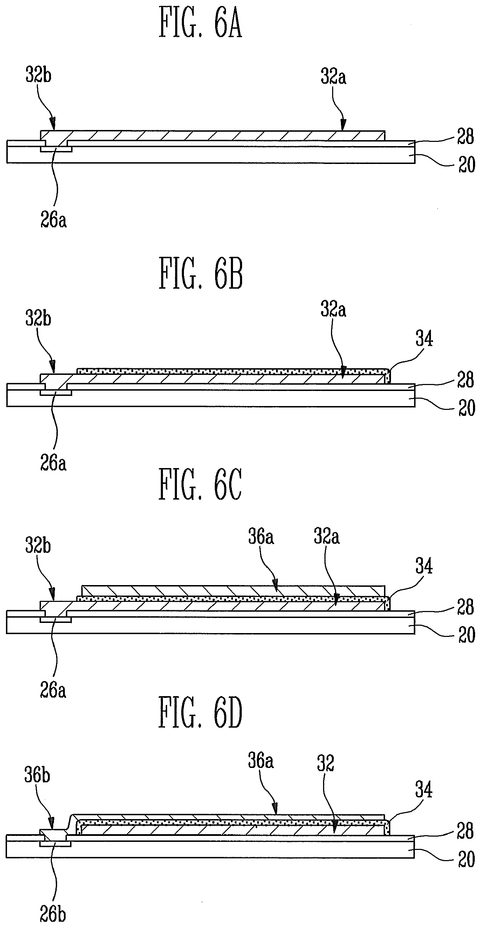

FIG. 2 is an exploded perspective view of a smart card according to an embodiment of the present invention. FIGS. 5A to 5C are plan views illustrating the smart card of FIG. 2. FIGS. 6A to 6D are sectional views illustrating the smart card of FIG. 2.

Referring to FIG. 2, the smart card 100 includes a circuit board 20 having an integrated circuit (IC) module 22; a positive electrode layer 32 formed on the circuit board 20 and connected to a pad portion 26a on the circuit board 20; a negative electrode layer 36 disposed opposite to the positive electrode layer 32 and connected to a pad portion 26b on the circuit board 20; a separator 34 interposed between the positive and negative electrode layers 32 and 36; and a case 10a and 10b having terminals 40a and 40b respectively connected to the positive and negative electrode layers 32 and 36 and exposed to the exterior thereof.

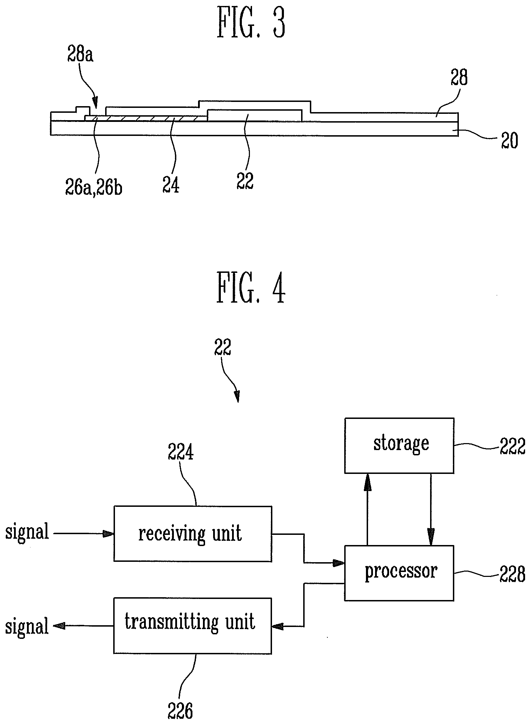

Referring to FIGS. 2 and 3, the circuit board 20 is formed in the form of a thin film like a flexible printed circuit board. On the circuit board 20 are formed a circuit interconnection 24 and the pad portions 26a and 26b connected to the circuit interconnection 24. The IC module 22 is connected to the circuit interconnection 24.

Referring to FIG. 4, the IC module 22 includes a storage unit 222 for storing information; a receiving unit 224 for receiving signals from the exterior of the IC module 22; a transmitting unit 226 for transmitting signals to the exterior of the IC module 22; and a processing unit 228. Here, the processing unit 228 processes signals received from the receiving unit 224 to store information obtained from the processed signals in the storage unit 222 and processes the information stored in the storage unit 222 to provide the processed information to the transmitting unit 226.

The storage unit 222 may include a memory device for storing information, and the processing unit 228 may include a central processing unit (CPU) for processing information. In the case of a contact smart card, each of the receiving and transmitting units 224 and 226 has a contact portion (not shown) for communication with a card reader. In the case of a non-contact smart card, each of the receiving and transmitting units 224 and 226 has a coil-shaped antenna (not shown).

An insulating protection layer 28 is formed on the entire surface of the circuit board 20 having the IC module 22, and the pad portions 26a and 26b are exposed to the exterior of the circuit board 20 through openings 28a formed on the protection layer 28, respectively. The protection layer 28 is formed of polyethylene (PE), polypropylene (PP) or the like.

In FIG. 4, it has been described that the storage unit 222, the receiving unit 224, the transmitting unit 226 and the processing unit 228 are configured as an example of the IC module 22. However, the present invention is not specifically limited as long as it has a configuration capable of storing user's information, performing information processing such as calculation and communicating with a card reader.

Referring to FIGS. 5A and 6A, the positive electrode layer 32 is formed to have, for example, a thickness of about 10 to 30 µm on the circuit board 20. The positive electrode layer 32 includes an electrode portion 32a and a tab portion 32b protruding from the electrode portion 32a. The tab portion 32b is connected to the exposed pad portion 26a, so that the positive electrode layer 32 is connected to the circuit board 20.

The positive electrode layer 32 may be formed of a positive electrode active material using a spray, coating or deposition method. Lithium-based oxides such as lithium cobalt oxide (LiCoO₂), lithium nickel oxide (LiNiO₂) and lithium manganese oxide (LiMn₂O₄) may be used as the positive electrode active material. A binder and conducting material may be mixed with the positive electrode active material.

In this embodiment, the positive electrode layer 32 does not include a positive electrode collector made of a metal such as aluminum (Al). Hence, in order to secure sufficient conductivity, the conducting material may be mixed in the positive electrode active material at a rate of about 10% or higher, e.g., about 10 to 40%.

Referring to FIGS. 5B and 6B, the separator 34 may be formed to have, for example, a thickness of about 3 to 10 µm on the positive electrode layer 32. In order to prevent a short circuit between the positive and negative electrode layers 32 and 36, the width of the separator 34 may be formed wider than that of the positive electrode layer 32, i.e., to surround sidewalls of the electrode portion 32a of the positive electrode layer 32.

The separator 34 is a porous insulating material through which lithium ions can pass. The separator 34 may be formed with a fiber non-woven fabric including resin such as polyethylene, polypropylene or polyolefin, mixture thereof, or one or more selected from the group consisting of cellulose, polyester and polypropylene.

An EC-based or PC-based electrolyte may be contained in the separator 34. For example, an electrolyte may be penetrated into the separator 34 by dipping the separator 34 in the electrolyte.

Referring to FIGS. 5C, 6C and 6D, the negative electrode layer 36 may be formed to have, for example, a thickness of about 10 to 30 µm on the separator 34. The negative electrode layer 36 includes an electrode portion 36a and a tab portion 36b protruding from the electrode portion 36a. The tab portion 36b is connected to the exposed pad portion 26b, so that the negative electrode layer 36 is connected to the circuit board 20. The electrode portion 36a of the negative electrode layer 36 is disposed to overlap with the electrode portion 32a of the positive electrode layer 32. The tab portion 36b of the negative electrode layer 36 is necessarily disposed at a different position from that of the tab portion 32b of the positive electrode layer 32 so as not to overlap with the tab portion 32b of the positive electrode layer 32. That is, at the portion taken along line I1-I11 of FIG. 5C, the electrode portion 32a of the positive electrode layer 32 is necessarily exposed as illustrated in FIG. 6C. At the portion taken along line I2-I22 of FIG. 5C, the electrode portion 36a of the negative electrode layer 36 is necessarily exposed as illustrated in FIG. 6D.

The negative electrode layer 36 may be formed of a negative electrode active material using a spray, coating or deposition method. Coke-based or graphite-based carbon may be used as the negative electrode active material. A binder and a conducting material may be mixed with the negative electrode active material.

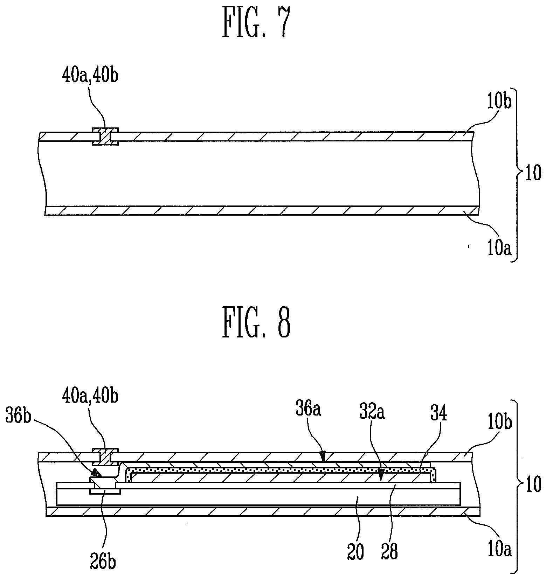

Referring to FIGS. 2 and 7, the case 10 includes a lower plate 10a and an upper plate 10b. The case 10 may be formed in the shape of a thin film in which the lower and upper plates 10a and 10b are connected to each other. Terminals 40a and 40b are formed at any one of the lower and upper plates 10a and 10b, e.g., the upper plate 10b. Here, each of the terminals 40a and 40b allows the inner and outer surfaces of the upper plate 10b to be electrically connected to each other through a hole passing through the upper plate 10b. The terminals 40a and 40b are necessarily formed to correspond to the tab portion 32b of the positive electrode layer 32 and the tab portion 36b of the negative electrode layer 36, respectively.

The case 10 is made of a flexible resin. Here, the flexible resin may include synthetic resins such as nylon, polyvinyl chloride (PVC), polyethylene, acrylonitrile butadiene styrene (ABS), polyethylene terephthalate (PET), polyethylene terephthalate-G (PET-G) and Teflon (polytetrafluoroethylene, PTFE). The case 10 may be formed into a single-layered or multi-layered structure of a film made of a synthetic resin or a multi-layered structure of a film made of a synthetic resin and a metal thin film such as aluminum.

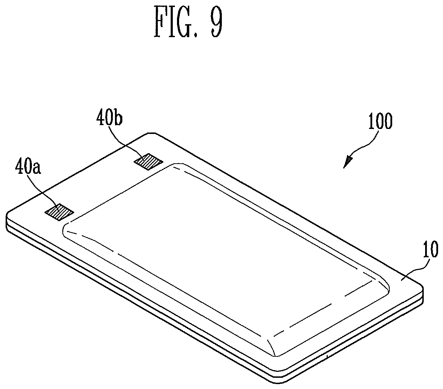

Referring to FIG. 8, in the state that a stacked assembly of the circuit board 20, the positive electrode layer 32, the separator 34 and the negative electrode layer 36 is interposed between the lower and upper plates 10a and 10b, edge portions of the lower and upper plates 10a and 10b are joined with each other using a method such as heat compression, so that the stacked assembly is sealed as illustrated in FIG. 9. At this time, since the tab portion 32b of the positive electrode layer 32 and the tab portion 36b of the negative electrode layer 36 are exposed to the exterior of the case 10, they are respectively connected to the terminals 40a and 40b of the upper plate 10b by compression. The terminals 40a and 40b exposed to the exterior of the case 10 are respectively connected to the tab portion 32b of the positive electrode layer 32 and the tab portion 36b of the negative electrode layer 36, thereby charging and discharging a secondary battery.

The smart card of the present invention has a secondary battery, so that information storage and processing are performed in the smart card itself. Accordingly, the smart card can be applied to various fields and uses. For example, the smart card may be used as a cash card, a credit card, a point card, an electronic money card, a pass card, an identification (ID) card, or the like.

## Claims

1. A secondary battery, comprising:
a circuit board (20, 120) comprising first and second connection terminals (26a, 26b; 126a, 126b) wherein the first connection terminal (26a, 126a) comprises a first connection pad disposed towards a first edge of the circuit board (20, 120) and the second connection terminal (26b, 126b) comprises a second connection pad disposed towards a second edge of the circuit board, the circuit board having a circuit module (22, 122) mounted thereon and being coated with a protection layer (28, 128);
a first electrode layer (32, 132) disposed on the protection layer of the circuit board (120) so as to fully cover the circuit module (22, 122), the first electrode layer comprising a first electrode portion (32a, 132a) and a first tab portion (32b, 132b) extending from a corner of the first electrode portion, the first tab portion being directly connected to the first connection pad through a first opening in the protection layer;
a second electrode layer (36, 136) disposed on the first electrode layer (32, 132), the second electrode layer comprising a second electrode portion (36a, 136a) and a second tab portion (36b, 136b) extending from a corner of the second electrode portion, the second tab portion being directly connected to the second connection pad through a second opening in the protection layer; and
a separator (34, 134) interposed between the first and second electrode layers.

2. The secondary battery of claim 1, wherein the circuit module comprises a protection circuit (122) on the circuit board (120), wherein the protection circuit is connected to the connection terminals (126a, 126b) via a circuit interconnection (124).

3. The secondary battery of any one of the preceding claims, wherein the circuit board comprises a flexible printed circuit board.

4. The secondary battery of any one of the preceding claims, further comprising a first insulating cover film (139) on a surface of the second electrode layer.

5. The secondary battery of claim 4, further comprising a second insulating cover film (129) on a surface of the circuit board opposite the surface having the protection layer.

6. The secondary battery of claim 4 or 5, wherein the first or second insulating cover film seals the peripheral edges of the circuit board (120).

7. The secondary battery of any one of the preceding claims, wherein the separator extends beyond the edges of the first electrode layer to prevent a short circuit between the first and second electrode layers.

8. A smart card comprising a secondary battery according to any one of the preceding claims, wherein the circuit module (22) comprises an integrated circuit module (22) connected to the first and second terminals (26a, 26b).

9. The smart card of claim 8, further comprising a case (10a, 10b) for receiving the circuit board (20), the case including first and second exterior terminals (40a, 40b) respectively connected to the first and second electrode layers (32, 36).

10. The smart card of claim 9, wherein the case comprises a flexible resin.

11. The smart card of claim 9 or 10, wherein the case comprises upper (10b) and lower (10a) plates, wherein the upper and lower plates are joined together so that the exterior terminals (40a, 40b) are in contact with the first and second terminals (26a, 26b).

## Patentansprüche

1. Sekundärbatterie, umfassend:
eine Leiterplatte (20,120), die erste und zweite Verbindungsanschlüsse (26a, 26b;
126a, 126b) umfasst, wobei der erste Verbindungsanschluss (26a, 126a) eine nahe einem ersten Rand der Leiterplatte (20,120) angeordnete erste Verbindungskontaktstelle umfasst und der zweite Verbindungsanschluss (26b, 126b) eine nahe einem zweiten Rand der Leiterplatte angeordnete zweite Verbindungskontaktstelle umfasst, wobei die Leiterplatte ein Schaltkreismodul (22, 122) aufweist, das auf ihr montiert ist und mit einer Schutzschicht (28, 128) beschichtet ist;
eine erste Elektrodenschicht (32, 132), die auf der Schutzschicht der Leiterplatte (120) angeordnet ist, um das Schaltkreismodul (22, 122), die erste Elektrodenschicht, die einen ersten Elektrodenabschnitt (32a, 132a) und einen sich von einer Ecke des ersten Elektrodenabschnitts erstreckenden ersten Nasenabschnitt (32b, 132b) umfasst, vollständig zu bedecken, wobei der erste Nasenabschnitt mit der ersten Verbindungskontaktstelle durch eine erste Öffnung in der Schutzschicht direkt verbunden ist;
eine auf der ersten Elektrodenschicht (32, 132) angeordnete zweite Elektrodenschicht (36, 136), wobei die zweite Elektrodenschicht einen zweiten Elektrodenabschnitt (36a, 136a) und einen sich von einer Ecke des zweiten Elektrodenabschnitts erstreckenden zweiten Nasenabschnitt (36b, 136b) umfasst, wobei der zweite Nasenabschnitt mit der zweiten Verbindungskontaktstelle durch eine zweite Öffnung in der Schutzschicht direkt verbunden ist; und
einen zwischen der ersten und zweiten Elektrodenschicht angeordneten Separator (34, 134).

2. Sekundärbatterie nach Anspruch 1, wobei das Schaltkreismodul eine Schutzschaltung (122) auf der Leiterplatte (120) umfasst, wobei die Schutzschaltung mit den Verbindungsanschlüssen (126a, 126b) über eine Schaltverbindung (124) verbunden ist.

3. Sekundärbatterie nach einem der vorangehenden Ansprüche, wobei die Leiterplatte eine flexible gedruckte Leiterplatte umfasst.

4. Sekundärbatterie nach einem der vorangehenden Ansprüche, ferner umfassend einen ersten isolierenden Deckfilm (139) auf einer Oberfläche der zweiten Elektrodenschicht.

5. Sekundärbatterie nach Anspruch 4, ferner umfassend einen zweiten isolierenden Deckfilm (129) auf einer Oberfläche der Leiterplatte, die der Oberfläche mit der Schutzschicht entgegengesetzt ist.

6. Sekundärbatterie nach Anspruch 4 oder 5, wobei der erste oder zweite isolierende Deckfilm die Außenränder der Leiterplatte (120) abdichtet.

7. Sekundärbatterie nach einem der vorangehenden Ansprüche, wobei der Separator sich über die Ränder der ersten Elektrodenschicht hinaus erstreckt, um einen Kurzschluss zwischen der ersten und zweiten Elektrodenschicht zu verhindern.

8. Smartcard, umfassend eine Sekundärbatterie nach einem der vorangehenden Ansprüche, wobei das Schaltkreismodul (22) ein mit dem ersten und zweiten Anschluss (26a, 26b) verbundenes integriertes Schaltkreismodul (22) umfasst.

9. Smartcard nach Anspruch 8, ferner umfassend ein Gehäuse (10a, 10b) zum Aufnehmen der Leiterplatte (20), wobei das Gehäuse einen ersten und zweiten äußeren Anschluss (40a, 40b), die mit der ersten bzw. zweiten Elektrodenschicht (32, 36) verbunden sind, umfasst.

10. Smartcard nach Anspruch 9, wobei das Gehäuse ein flexibles Harz umfasst.

11. Smartcard nach Anspruch 9 oder 10, wobei das Gehäuse eine obere (10b) und untere (10a) Platte umfasst, wobei die obere und untere Platte zusammengefügt sind, sodass die äußeren Anschlüsse (40a, 40b) mit dem ersten und zweiten Anschluss (26a, 26b) in Kontakt stehen.

## Revendications

1. Batterie secondaire, comprenant :
une carte de circuit imprimé (20, 120) comprenant des première et deuxième bornes de connexion (26a, 26b ; 126a, 126b) dans laquelle la première borne de connexion (26a, 126a) comprend un premier plot de connexion disposé vers un premier bord de la carte de circuit imprimé (20, 120) et la deuxième borne de connexion (26b, 126b) comprend un deuxième plot de connexion disposé vers un deuxième bord de la carte de circuit imprimé, la carte de circuit imprimé ayant un module de circuit (22, 122) monté sur celle-ci et étant revêtue d'une couche de protection (28, 128) ;
une première couche d'électrode (32, 132) disposée sur la couche de protection de la carte de circuit imprimé (120) de manière à recouvrir complètement le module de circuit (22, 122), la première couche d'électrode comprenant une première partie d'électrode (32a, 132a) et une première partie de languette (32b, 132b) s'étendant depuis un coin de la première partie d'électrode, la première partie de languette étant directement connectée au premier plot de connexion à travers une première ouverture dans la couche de protection ;
une deuxième couche d'électrode (36, 136) disposée sur la première couche d'électrode (32, 132), la deuxième couche d'électrode comprenant une deuxième partie d'électrode (36a, 136a) et une deuxième partie de languette (36b, 136b) s'étendant depuis un coin de la deuxième partie d'électrode, la deuxième partie de languette étant directement connectée au deuxième plot de connexion à travers une deuxième ouverture dans la couche de protection ; et
un séparateur (34, 134) interposé entre les première et deuxième couches d'électrode.

2. Batterie secondaire de la revendication 1, dans laquelle le module de circuit comprend un circuit de protection (122) sur la carte de circuit imprimé (120), le circuit de protection étant connecté aux bornes de connexion (126a, 126b) par l'intermédiaire d'une interconnexion de circuit (124).

3. Batterie secondaire de l'une quelconque des revendications précédentes, dans laquelle la carte de circuit imprimé consiste en une carte de circuit imprimé flexible.

4. Batterie secondaire de l'une quelconque des revendications précédentes, comprenant en outre un premier film de couverture isolant (139) sur une surface de la deuxième couche d'électrode.

5. Batterie secondaire de la revendication 4, comprenant en outre un deuxième film de couverture isolant (129) sur une surface de la carte de circuit imprimé opposée à la surface ayant la couche de protection.

6. Batterie secondaire de la revendication 4 ou 5, dans laquelle le premier ou le deuxième film de couverture isolant assure l'étanchéité des bords périphériques de la carte de circuit imprimé (120).

7. Batterie secondaire de l'une quelconque des revendications précédentes, dans laquelle le séparateur s'étend au-delà des bords de la première couche d'électrode pour empêcher un court-circuit entre les première et deuxième couches d'électrode.

8. Carte à puce intelligente comprenant une batterie secondaire selon l'une quelconque des revendications précédentes, dans laquelle le module de circuit (22) consiste en un module de circuit intégré (22) connecté aux première et deuxième bornes (26a, 26b).

9. Carte à puce intelligente de la revendication 8, comprenant en outre un boîtier (10a, 10b) pour recevoir la carte de circuit imprimé (20), le boîtier comportant des première et deuxième bornes extérieures (40a, 40b) connectées respectivement aux première et deuxième couches d'électrode (32, 36).

10. Carte à puce intelligente de la revendication 9, dans laquelle le boîtier comprend une résine flexible.

11. Carte à puce intelligente de la revendication 9 ou 10, dans laquelle le boîtier comprend des plaques supérieure (10b) et inférieure (10a), les plaques supérieure et inférieure étant assemblées de sorte que les bornes extérieures (40a, 40b) soient en contact avec les première et deuxième bornes (26a, 26b).
